(19) Europäisches Patentamt
European Patent Office
Office européen des brevets

(11) EP 3 112 894 B1

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(51) Int Cl.:
**G01S 7/41** *(2006.01)* **G01S 13/52** *(2006.01)*

(21) Anmeldenummer: **16001346.2**

(22) Anmeldetag: **15.06.2016**

(54) **VERFAHREN ZUR AUTOMATISCHEN KLASSIFIKATION VON RADAROBJEKTEN**

METHOD FOR THE AUTOMATIC CLASSIFICATION OF RADAR OBJECTS

PROCEDE DE CLASSIFICATION AUTOMATIQUE D'OBJETS RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2015 DE 102015008403**

(43) Veröffentlichungstag der Anmeldung:
**04.01.2017 Patentblatt 2017/01**

(73) Patentinhaber: **HENSOLDT Sensors GmbH 82024 Taufkirchen (DE)**

(72) Erfinder:
• **Neumann, Christoph 89179 Beimerstetten (DE)**
• **Senkowski, Hermine 89233 Neu-Ulm / Burlafingen (DE)**

(74) Vertreter: **LifeTech IP Spies & Behrndt Patentanwälte PartG mbB Elsenheimerstraße 47a 80687 München (DE)**

(56) Entgegenhaltungen:
**EP-A1- 0 034 125 EP-A1- 0 059 998 US-B1- 6 677 886**

EP 3 112 894 B1

## Beschreibung

Die Erfindung betrifft ein Verfahren zur automatischen Klassifikation von Radarobjekten durch einen Clusteralgorithmus zur Zusammenstellung einer Mehrzahl von Objektdetektionen, sogenannter Range Reports, aus aufeinander folgenden, kohärenten Integrationsintervallen (auch Bursts genannt) nach dem Oberbegriff von Anspruch 1.

Signaturklassifikation von Radarobjekten ist im Stand der Technik hinreichend bekannt und wird in der Radartechnik eingesetzt, um Falscherkennungen und Fehler bei der Verfolgung von Zielen, dem sogenannten Tracking, zu reduzieren. Üblicherweise wird hierzu in einem Eingangskanal des Radars innerhalb einer Mehrzahl aufeinanderfolgender kohärenter Integrationsintervalle, also Bursts, ein Empfangssignal verarbeitet und eine Objektdetektion unter Verwendung von Einzel-Detektionen je Burst, indem diese nach dem Kriterium "geometrische Zusammengehörigkeit" einem Clusteralgorithmus zur Bildung eines Plots zugeführt werden. Häufig erfolgt die Einzel-Detektion auf dem Radarsignal in einer zweidimensionalen Matrix in der Range-Doppler-Ebene, daher werden die Detektionen im Folgenden als "Range Reports" bezeichnet. Dieser Begriff steht hier synonym für eine Schwellwertüberschreitung des Signalpegels in der Range-Doppler-Matrix, wobei vorausgesetzt wird, dass das Radar in der Dimension "Entfernung" (="Range") eine definierte Auflösung bereitstellt. In der Dimension "Doppler" wird ebenfalls eine definierte Auflösung durch das Radar vorausgesetzt; die einzelnen Auflösungszellen werden im Folgenden als "Dopplerfilter" bezeichnet. Inhalt der Dopplerfilter sind die nach Frequenzverschiebung des Radarechosignals sortierten Pegel je Entfernungszelle. Dabei entsprechen die Dopplerfilter unterschiedlichen Radialgeschwindigkeiten eines reflektierenden Objektes. Die Erkennung von Objekten (beispielsweise eines Hubschraubers o. ä) anhand ihres Echosignals in den Dopplerfiltern ist ebenfalls ein übliches Verfahren. Unter einem Plot wird im Folgenden die Ausgabe eines erkannten Objektes verstanden, wobei die Koordinaten des Plots aus dem Schwerpunkt der Adressen des Clusters im Koordinatensystem der Radarmessung (also z.B. Range, Doppler, Azimut) gebildet werden. Dieser Schwerpunkt wird im Folgenden als Plotschwerpunkt bezeichnet. Die Plots sind üblicherweise Eingangsinformation für die Zielverfolgung ("Tracking"), also für den Algorithmus, der die Objekte über die Zeit hinweg verfolgt und z.B. einem Beobachter zur Anzeige bringt.

Durch Einbeziehung bekannter Umgebungsinformationen sowie speziell angepasster und hoch auflösender Radare lassen sich Falscherkennungen und Fehler bei der Verfolgung von Zielen in einer durch das Radarkonzept und die Umgebungsbedingungen gegebenen Güte lösen. Für relativ niedrig auflösende Radare mit hoher Empfindlichkeit, wie in der zivilen Luftraumüberwachung vielfach angewendet, ist auf Basis der o.g. üblichen Verfahren zur Zielentdeckung eine besonders hohe Anzahl Falscherkennungen (= Plots von unerwünschten Objekten) zu erwarten, die nicht immer mit den Anforderungen an das Radar verträglich ist, indem sie zu fälschlich erzeugten oder fälschlich geführten Tracks führen.

In US 6,677,886 wird ein bekanntes Verfahren zum Auswerten von Wetterechos in Radaraufnahmen unter Nutzung von Konfidenzfaktoren beschrieben.

Der vorliegenden Erfindung liegt daher die Aufgabe zugrunde, mittels einer auch für niedrig auflösende und gleichzeitig empfindliche Radarsysteme zuverlässigen Methode zur Klassifikation von Radarobjekten unerwünschte Objekte als solche zu erkennen und von den gewünschten Objekten (z.B. Luftfahrzeuge) zu unterscheiden.

Diese Aufgabe wird durch das Verfahren mit den in Anspruch 1 aufgeführten Merkmalen gelöst. Die Unteransprüche betreffen vorteilhafte Varianten und Ausführungsformen der Erfindung.

Erfindungsgemäß wird das oben angesprochene Verfahren zur Klassifikation von Radarobjekten dadurch erweitert, dass

- jedem Range Report die Dopplerfilterampliduden der zwei azimutal direkt benachbarten Bursts aus derselben Entfernungszelle hinzugefügt werden

- eine Untermenge der aufgenommenen Range Reports dadurch gebildet wird, dass, beginnend mit dem Range Report am Ort des Plotschwerpunktes, benachbarte Range Reports aus einer definierten Anzahl von Bursts nach Azimutposition in einer Matrix der Dimension Azimut x Entfernung sortiert mit dem Plotschwerpunkt im Zentrum angeordnet werden

- die den Range Reports zugehörigen Dopplerfilteramplituden aus dem Bereich Plotschwerpunkt +/- einer definierten Anzahl von Bursts entsprechend der Burstfolge angeordnet werden

- ein zusammengesetztes "Plotspektrum" als Vektor von Range Reports aus der genannten Matrix gebildet wird, der mit der Entfernungszelle des Plotschwerpunktes initiiert wird; anschließend wird zu allen Burstpositionen, zu welchen in dieser Entfernungszelle kein Range Report vorliegt, der nächstliegende Range Report in benachbarten Entfernungszellen eingefügt. Verbleibende Lücken werden mit den benachbarten Filteramplituden der verwendeten Range Reports aufgefüllt und danach noch verbleibende Lücken werden mit einem passenden Rauschwert aufgefüllt.

Die erfindungsgemäße Lösung erweist sich gegenüber dem Stand der Technik insbesondere deswegen als vorteilhaft, weil auf diese, selbst in wirtschaftlich günstigeren, niedrig auflösenden Radaren, eine sinnvolle Objektklassifikation durchgeführt werden kann. Auch wird auf diese Weise dafür Sorge getragen, dass das so entstehende "Plotspektrum" im Rahmen der Trennschärfe der Plotbildung keine spektralen Anteile benachbarter Objekte enthält. Damit wird es möglich, Falscherkennungen sowohl bei den Objekten selbst sowie bei deren Formierung zu Tracks deutlich zu reduzieren.

Nachfolgend wird die Erfindung anhand der Zeichnung näher erläutert. Es zeigen

Figur 1 ein schematisches Ablaufdiagramm der Signalverarbeitung,
Figur 2 eine Prinzipdarstellung des erfindungsgemäßen Verfahrens,
Figur 3 eine Darstellung zu Normalisierung der Dopplerfilteramplituden; und
Figur 4 eine schematische Darstellung zur Klassifikation.

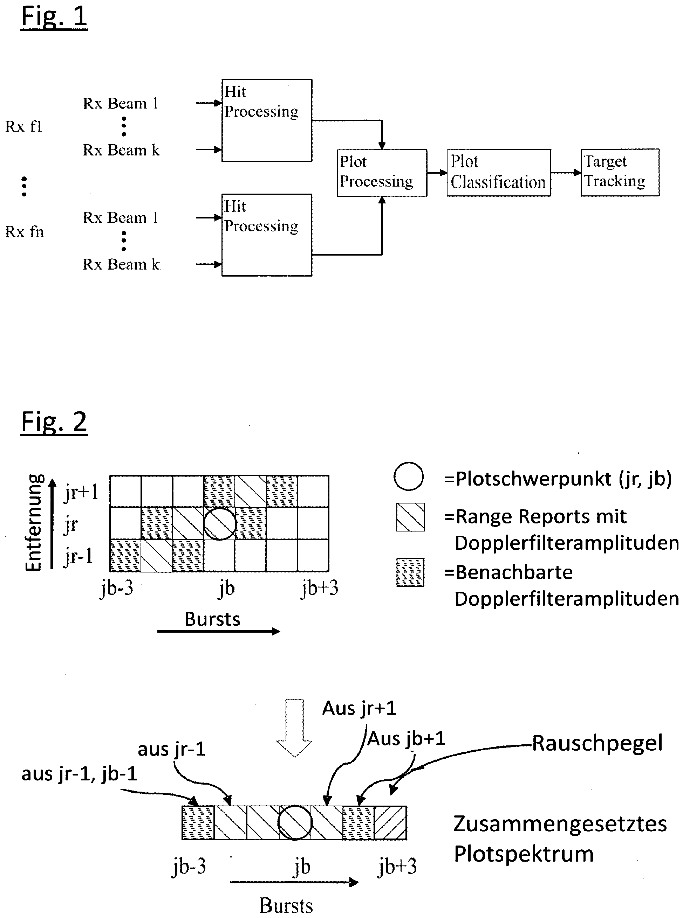

Figur 1 zeigt in der Art eines schematischen Ablaufdiagramms einen Auszug aus der Signalverarbeitung, bei welcher das erfindungsgemäße Verfahren zur Anwendung kommen kann. Dabei werden zunächst aus Eingangskanälen Rx einer oder mehrerer verwendeter Radar-Mittenfrequenzen f1 bis fn unter Verwendung der Echosignale eines oder mehrerer Empfangs-Antennen sowohl für den *"Beam 1" bis "Beam k"* als Verfahrensschritt "Hit Processing" Schwellwertüberschreitungen (Hits) erfasst und zur Erzeugung von Plots im nachfolgenden Verfahrensschritt "Plot Processing" weiterverarbeitet. Diese Verarbeitung umfasst unter anderem die oben bereits erläuterte Dopplerfilterung, die Hits werden z.B. in Form der o.g. Range Reports ausgegeben, in jedem Fall mit Koordinaten Angaben zu "Entfernung", "Azimut" und "Zeit".

Daneben fallen bei der oben genannten Signalverarbeitung noch zusätzliche Informationen an, welche bei der nachfolgend dargestellten Plotklassifikation Verwendung finden können, insbesondere:

• Dopplerfilteramplitude für jeden Dopplerfilter eines Range Reports
• Dopplerfilteramplitude für jeden zeitlichen Vorgänger, also die zeitlich vorhergehende Azimutposition in der selben Entfernung
• Dopplerfilteramplitude für jeden zeitlichen Nachfolger, also die zeitlich folgende Azimutposition in derselben Entfernung
• Pegel des Rauschhintergrundes (z.B. aus Langzeitmessung)

Der Schritt "Plot Processing" liefert zur Erzeugung der oben genannten Plots die erfassten Zielpositionen in Form von Clustern der Range Reports aller Empfangskanäle. Dabei sind die Plotpositionen die Schwerpunkte der genannten Cluster, also Objektkoordinaten in Entfernung, Azimut und Zeit.

Neben einem gemeinsamen Schwerpunkt liefert die Plotverarbeitung für die spätere Verwendung in der Plotklassifizierung auch die Plotschwerpunkte aus den Range Reports der Einzelkanäle, hier also der Empfangsfrequenzen f1 ... fn und / oder Beam 1 ... Beam k, soweit mehrere Kanäle verfügbar sind.

Der Plotklassifikation nachgeschaltet ist die Zielverfolgung ("Target Tracking"), welche alle Plotinformationen, ergänzt um das Ergebnis der Plotklassifikation, erhält.

Nachfolgend wird die in Figur 1 lediglich als Verfahrensschritt angedeutete erfindungsgemäße Plotklassifikation anhand Figur 2 näher erläutert.

Zunächst werden mit jedem Range Report zusätzliche Dopplerfilteramplituden azimutal angrenzender Bursts verknüpft, wie im oberen Teil der Figur dargestellt. Aus den so zusammengestellten Range Reports wird die ebenfalls im oberen Teil der Figur dargestellte Untermenge dadurch gebildet, dass um den Range Report am Ort des Plotschwerpunktes (in der Figur mit einem Kreis gekennzeichnet) eine Matrix mit den Dimensionen Azimut und Entfernung aufgespannt wird. Im gezeigten Beispiel umfasst die genannte Matrix Dopplerfilteramplituden für drei Entfernungszellen r-1 bis r+1 und sieben Bursts b-3 bis b+3. Es versteht sich von selbst, dass die in der Figur gewählte Dimension lediglich beispielhaft zu verstehen ist. Die spezifische Dimension dieser Matrix kann dabei optimalerweise auf das verwendete Radarsystem angepasst werden, insbesondere auf Basis von Auflösung, Antennencharakteristik und Anzahl verfügbarer Bursts pro Beleuchtungszeitraum. Aus der gezeigten Matrix soll ein einzig verbleibendes, zusammengesetztes Plotspektrum generiert werden. Hierzu wird ein Vektor aus Dopplerspektren gebildet, mit den Dopplerfilteramplituden des Plotschwerpunkts im Zentrum und umgeben Dopplerfilteramplituden aus angrenzenden Range Reports innerhalb derselben radialen Entfernungszelle. Anschließend können verbleibende Lücken mit Dopplerfilteramplituden aus räumlich benachbarten Entfernungszellen gefüllt werden. Weitere Lücken können mit vorhandenen, dem Schwerpunkt benachbarten Dopplerfilteramplituden besetzt werden, die zwar keine Schwellwertüberschreitung ausgelöst haben, allerdings dennoch partiell das Zielsignal enthalten. Die Einbeziehung dieser Dopplerfilteramplituden ist vorteilhaft, um die Informationsdichte zusätzlich zu erhöhen. Die nach diesen Schritten noch verbleibenden Lücken können mit realistischen Rauschwerten gefüllt werden. Durch die so verdichtete Datenmenge ist es nachfolgend möglich, auch bei niedrig auflösenden Radaren eine hohe Güte bei der Objektklassifikation zu erzielen. Durch die Wahl der Ausgabe in Form eines einfachen Plotspektrums ist das Verfahren kompatibel zu den aus der Literatur bekannten üblicherweise nachfolgenden Signalverarbeitungsverfahren der Radartechnik.

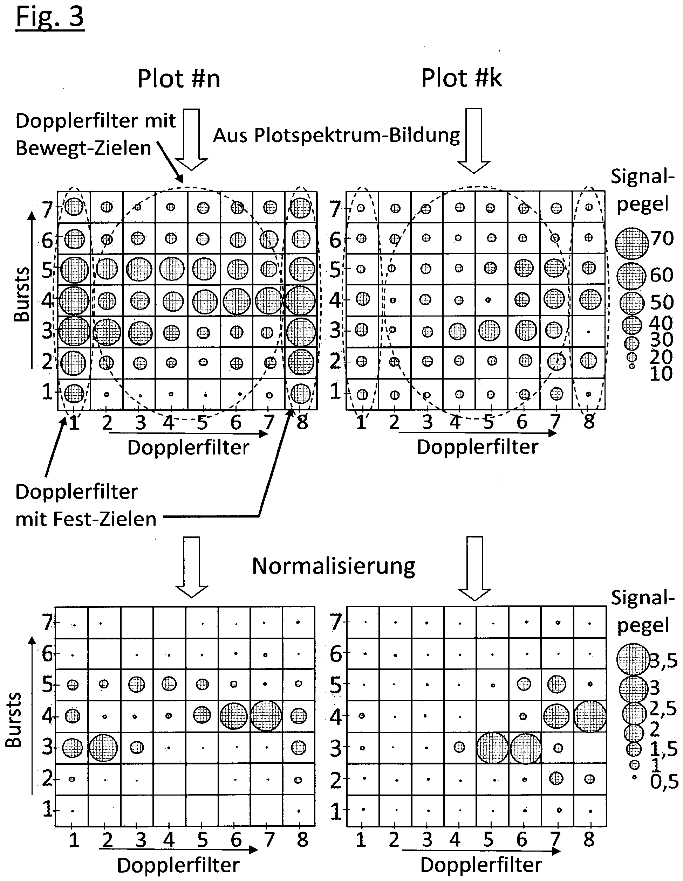

Um eine qualitative Verbesserung der anschließenden Datenverarbeitung zu erreichen und insbesondere Festzeicheneinflüsse zu reduzieren, kann nachfolgend die anhand Figur 3 illustrierte Normalisierung der Dopplerfilteramplituden im Plotspektrum durchgeführt werden.

Diese Normalisierung kann in vorteilhafter Weise spezifisch auf das jeweilige Plotspektrum erfolgen und nicht in Bezug auf einen globalen, vordefinierten Wert. Somit erfolgt eine individuelle Normalisierung für jedes Plotspektrum. Dabei ist es weiterhin von Vorteil, radarspezifische Spektralbereiche oder Einzelfrequenzen (Dopplerfilter) getrennt zu behandeln. Somit kann eine Normalisierung beispielsweise in Bezug auf die jeweiligen Mittelwerte der Amplituden oder Leistungen der Dopplerfilter mit höherer Frequenzverschiebung (Bewegt-Ziele, in der Abbildung die "inneren" Filter) und der Dopplerfilter mit geringer oder keiner Frequenzverschiebung (Fest-Ziele, in der Abbildung die "äußeren" Filter) durchgeführt werden.

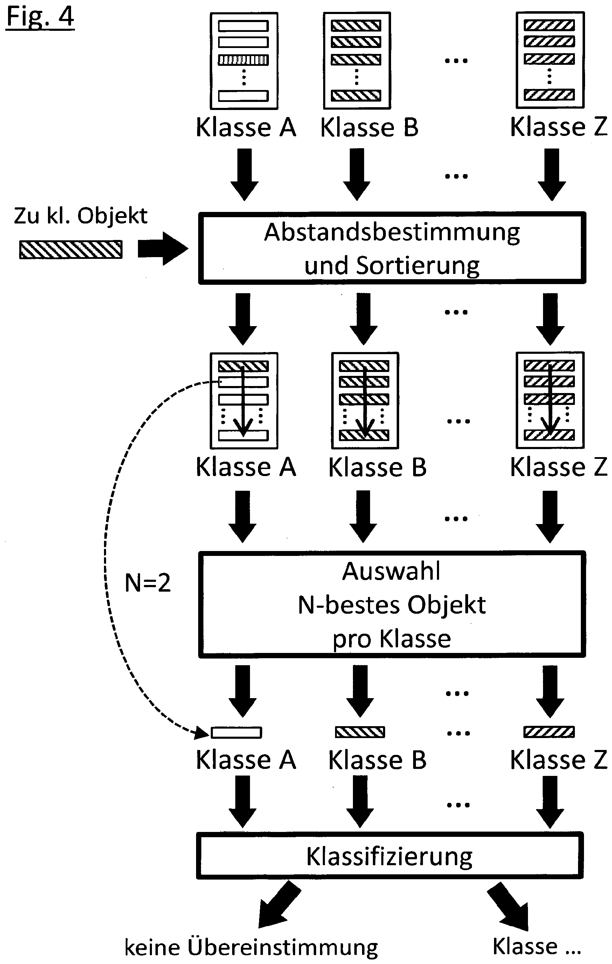

Eine weitere vorteilhafte Weiterbildung der Erfindung, der die zuvor genannten Ausbildungen jedoch nicht zwingend vorangegangen sein müssen, ist bezüglich der Objektklassifizierung möglich. Diese Klassifikation erfolgt auf Datenbasis einer Merkmalbestimmung beispielsweise auf Grund von Textur- oder Korrelationsanalysen und ist dem Fachmann hinlänglich bekannt. Zur Klassifizierung ist eine spezielle Abwandlung der Nächste-Nachbarn-Klassifikation vorgesehen, mit einer nach Stand der Technik üblichen Trainingsphase und erfindungsgemäß modifizierten Anwendung, dargestellt in Figur 4.

Zur Klassifikation ist es dabei vorgesehen, zunächst den Abstand $d_{k,l}$ des Merkmalsvektors des zu klassifizierenden Objektes von allen Repräsentanten der definierten Zielklassen in einer Datenbank zu bestimmen, also

$$d_{k,l} = \left( \sum_{i=1}^{N_{feat}} \left| f - \lambda_{k,l} \right|^{p} \right)^{1/p}$$

mit

$N_{feat}$ = Länge des Merkmalsvektors
f = Realer Merkmalsvektor des zu klassifizierenden Objektes
$\lambda_{k,l}$ = Merkmalsvektor des l-ten Repräsentanten der Klasse k
p = Normierungsparameter, empfohlen: p = 1 oder p=2

Im Anschluss werden die Einträge innerhalb der jeweiligen Klasse nach deren Abstand $d_{k,l}$ zum zu klassifizierenden Objekt sortiert und ein vordefinierter Rang K (typischerweise ein Wert zwischen 2 und 5) für jede Objektklasse ausgewählt. Nachfolgend wird ein für jede Klasse k ein Minimalabstand $dmn_k$ entsprechend dem gewählten Rang K bestimmt, also:

$$d_{sort,k} = sort(d_{1...n_k,k})$$

$$dmn_k = d_{sort}(K)$$

mit:

sort(...) = Aufsteigende Sortierung nach Wert
Nk = Anzahl der Repräsentanten der Klasse k
K = gewählter Rang << Nk

Im Gegensatz zum bekannten "K-Nearest-Neighbour" - Klassifikator ist aufgrund der Sortierung für eine Entscheidung auf eine Klasse nicht erforderlich, dass die nächsten K Abstände zu allen anderen Klassen größer sind als zur Zielklasse, auf die entscheiden wurde.

Durch den definierbaren Rang ist es möglich, vereinzelte fehlerhafte Elemente in den Klassen-Repräsentanten auszublenden, die beispielsweise durch Fehlzuordnungen im Trainingsprozess entstanden sind. Es wird somit nicht auf die Klasse mit K besten Abständen erkannt, sondern auf die Klasse, dessen K-t bester Abstand kleiner ist als der K-t beste aller anderen Klassen.

Auf dieser Abstands-Messungen wird anschließend für jede der Klassen k = 1 ...NK (= Anzahl definierter Zielklassen) ein normierter Gütewert Qk berechnet, worauf die tatsächliche Auswahl der Klasse letztendlich beruht:

$$q_k = \frac{dmn_k}{\min_{k=1...NK}(dmn_k)} \, , \; Q_k = \frac{q_k}{\sum_{i=1...NK} q_i}$$

Es kann jedoch von Vorteil sein, die Entscheidung "keine Übereinstimmung" zu treffen, sollte der Gütewert für zwei oder mehr Klassen einen vordefinierten Abstands-Schwellwert unterschreiten.

Es versteht sich von selbst, dass die oben beschriebenen Verfahren nicht zwingend in demselben Radarsystem verwirklicht sein müssen. Es ist durchaus denkbar, beispielsweise nur eines der Verfahren oder eine beliebige Unterkombination der Verfahren in einem Radarsystem anzuwenden.

**Patentansprüche**

1. Verfahren zur Klassifikation von Radarobjekten, wobei

   - in einem Eingangskanal innerhalb einer Mehrzahl aufeinanderfolgender kohärenter Integrationsintervalle ein Empfangssignal prozessiert und eine Objektdetektion unter Verwendung von Dopplerfilteramplituden durchgeführt wird, wobei Range Reports erzeugt werden
   - eine Mehrzahl von Range Reports durch einen Clusteralgorithmus zur Bildung eines Plots zusammengestellt wird,
**dadurch gekennzeichnet, dass**
- jedem Range Report Dopplerfilteramplituden der beiden azimutal angrenzenden kohärenten Integrationsintervallen aus derselben Entfernungszelle hinzugefügt werden
- eine Untermenge der Range Reports dadurch gebildet wird, dass beginnend mit dem Range Report am Ort eines Plotschwerpunktes benachbarte Range Reports aus einer definierten Anzahl von kohärenten Integrationsintervallen nach Azimutposition in einer Matrix der Dimension Azimut x Entfernung sortiert mit dem Plotschwerpunkt im Zentrum angeordnet werden
- die den Range Reports zugehörigen Dopplerfilteramplituden aus dem Bereich Plotschwerpunkt +/-einer definierten Anzahl von kohärenten Integrationsintervallen entsprechend der Folge von kohärenten Integrationsintervallen angeordnet werden
- ein zusammengesetztes Plotspektrum als Vektor von Range Reports aus der genannten Matrix gebildet wird, der initiiert wird mit der Entfernungszelle des Plotschwerpunktes
- anschließend zu allen Positionen der kohärenter Integrationsintervalle, zu welchen in der genannten Entfernungszelle kein Range Report vorliegt, der nächstliegende Range Report in benachbarten Entfernungszellen eingefügt wird
- verbleibende Lücken mit den benachbarten Dopplerfilteramplituden der verwendeten Range Reports aufgefüllt werden
- danach noch verbleibende Lücken mit einem passenden Rauschwert aufgefüllt werden.

2. Verfahren nach Anspruch 1,
**dadurch gekennzeichnet, dass**
eine Normalisierung der Dopplerfilteramplituden im erhaltenen Plotspektrum erfolgt.

3. Verfahren nach Anspruch 2,
**dadurch gekennzeichnet, dass**
die Normalisierung spezifisch auf definierte Bereiche des Plotspektrums erfolgt.

4. Verfahren nach Anspruch 3,
**dadurch gekennzeichnet, dass**
eine Normalisierung in Bezug auf die jeweiligen Mittelwerte der Amplituden oder der Leistungen in definierten Bereichen des Plotspektrums durchgeführt wird.

5. Verfahren nach einem der vorangehenden Ansprüche,
**dadurch gekennzeichnet, dass**
zur Vornahme einer Klassifikation eines erkannten Objektes den Abstand des zu klassifizierenden Objektes von allen Einträgen vordefinierter Objektklassen zu bestimmen und die Einträge innerhalb der jeweiligen Objektklasse nach deren Abstand zum zu klassifizierenden Objekt sortiert werden, wobei ein vordefinierter Rang K für jede Objektklasse ausgewählt wird.

6. Verfahren nach Anspruch 5,
**dadurch gekennzeichnet, dass**
der vordefinierte Rang einen Wert von 2 bis 5 annimmt.

7. Verfahren nach einem der Ansprüche 5 oder 6,
**dadurch gekennzeichnet, dass**
je Objektklasse ein Gütewert berechnet wird und wobei eine Entscheidung "keine Übereinstimmung" getroffen wird, falls der Gütewert für zwei oder mehr Klassen einen vordefinierten Schwellwert unterschreitet.

**Claims**

1. Method for classifying radar objects,

- a received signal being processed in an input channel within a plurality of consecutive coherent integration intervals and object detection being carried out using Doppler filter amplitudes, range reports being generated
- a plurality of range reports being compiled by means of a cluster algorithm to form a plot,
**characterized in that**
- Doppler filter amplitudes of the two azimuthally adjacent coherent integration intervals from the same range cell are added to each range report
- a subset of the range reports is formed by, starting with the range report at the location of a plot centroid, arranging adjacent range reports from a defined number of coherent integration intervals sorted according to azimuthal position in a matrix of the dimension azimuth x range so as to have the plot centroid in the center
- the Doppler filter amplitudes assigned to the range reports from the region of the plot centroid +/- a defined number of coherent integration intervals are arranged according to the sequence of coherent integration intervals
- a composite plot spectrum is formed as a vector using range reports from said matrix, which vector is initiated using the range cell of the plot centroid
- the nearest range report is then inserted into adjacent range cells for all positions of the coherent integration intervals for which there is no range report in said range cell
- remaining gaps are filled with the adjacent Doppler filter amplitudes of the range reports used
- gaps still remaining are then filled with a suitable noise value.

2. Method according to claim 1, **characterized in that** a normalization of the Doppler filter amplitudes is carried out in the obtained plot spectrum.

3. Method according to claim 2, **characterized in that** the normalization is carried out specifically on defined regions of the plot spectrum.

4. Method according to claim 3, **characterized in that** a normalization is carried out in defined regions of the plot spectrum in relation to the respective mean values of the amplitudes or of the powers.

5. Method according to any of the preceding claims, **characterized in that** in order to carry out a classification of a detected object, the distance of the object to be classified from all entries of predefined object classes should be determined, and the entries within the relevant object class are sorted according to their distance from the object to be classified, a predefined rank K being selected for each object class.

6. Method according to claim 5, **characterized in that** the predefined rank assumes a value of from 2 to 5.

7. Method according to either claim 5 or claim 6, **characterized in that** a quality value is calculated for each object class, a decision of "no match" being made if the quality value for two or more classes falls below a predefined threshold value.

## Revendications

1. Procédé de classification d'objets radar,

    - un signal reçu étant traité dans un canal d'entrée au sein d'une pluralité d'intervalles d'intégration cohérents consécutifs, et une détection d'objet étant effectuée en utilisant des amplitudes de filtre Doppler, des rapports de plage étant générés
    - une pluralité de rapports de plage étant compilés par un algorithme de groupe pour former un tracé,
    **caractérisé en ce que**
    - des amplitudes de filtre Doppler des deux intervalles d'intégration cohérents azimutalement adjacents provenant de la même cellule de distance sont ajoutées à chaque rapport de plage
    - un sous-ensemble des rapports de plage est formé **en ce que**, en commençant par le rapport de plage à l'emplacement d'un centre de gravité de tracé, des rapports de plage adjacents provenant d'un nombre défini d'intervalles d'intégration cohérents, triés selon la position d'azimut dans une matrice de la dimension azimut x distance, sont disposés avec le centre de gravité de tracé au centre
    - les amplitudes de filtre Doppler appartenant aux rapports de plage provenant de la zone du centre de gravité de tracé +/- un nombre défini d'intervalles d'intégration cohérents sont disposées selon la séquence d'intervalles d'intégration cohérents
    - un spectre de tracé composite est formé comme vecteur de rapports de plage provenant de la matrice mentionnée, lequel est initié avec la cellule de distance du centre de gravité de tracé
    - le rapport de plage suivant est ensuite inséré dans des cellules de distance adjacentes pour toutes les positions des intervalles d'intégration cohérents pour lesquelles il n'y a pas de rapport de plage dans la cellule de distance mentionnée
    - les espaces vides restants sont remplis avec les amplitudes de filtre Doppler adjacentes des rapports de plage utilisés
    - les espaces qui restent encore vides après cela sont ensuite remplis avec une valeur de bruit appropriée.

2. Procédé selon la revendication 1, **caractérisé en ce qu'**une normalisation des amplitudes de filtre Doppler est effectuée dans le spectre de tracé obtenu.

3. Procédé selon la revendication 2, **caractérisé en ce que** la normalisation est effectuée spécifiquement sur des zones définies du spectre de tracé.

4. Procédé selon la revendication 3, **caractérisé en ce qu'**une normalisation est effectuée par rapport aux valeurs moyennes respectives des amplitudes ou des puissances dans des zones définies du spectre de tracé.

5. Procédé selon l'une des revendications précédentes, **caractérisé en ce que**, pour effectuer une classification d'un objet reconnu pour déterminer la distance de l'objet à classer par rapport à toutes les entrées de classes d'objets prédéfinies, les entrées au sein de la classe d'objets respective sont triées en fonction de leur distance par rapport à l'objet à classer, un rang K prédéfini étant sélectionné pour chaque classe d'objets.

6. Procédé selon la revendication 5, **caractérisé**

**en ce que** le rang prédéfini adopte une valeur de 2 à 5.

7. Procédé selon l'une des revendications 5 ou 6, **caractérisé**
**en ce qu'**une valeur de qualité est calculée pour chaque classe d'objets, et qu'une décision « pas de correspondance » est prise si la valeur de qualité est inférieure à une valeur seuil prédéfinie pour deux classes ou plus.

# Fig. 1

# Fig. 2

○ =Plotschwerpunkt (jr, jb)

▨ =Range Reports mit Dopplerfilteramplituden

▨ =Benachbarte Dopplerfilteramplituden

# Fig. 3

# Fig. 4

Klasse A    Klasse B    · · ·    Klasse Z

**Zu kl. Objekt**

| Abstandsbestimmung und Sortierung |

Klasse A    Klasse B    · · ·    Klasse Z

N=2

| Auswahl N-bestes Objekt pro Klasse |

Klasse A    Klasse B    · · ·    Klasse Z

| Klassifizierung |

keine Übereinstimmung          Klasse ...

**IN DER BESCHREIBUNG AUFGEFÜHRTE DOKUMENTE**

**In der Beschreibung aufgeführte Patentdokumente**

- US 6677886 B